**Europäisches Patentamt**

**European Patent Office**

**Office européen des brevets**

(19)

(11) Veröffentlichungsnummer : **0 408 869 B1**

(12) **EUROPÄISCHE PATENTSCHRIFT**

(45) Veröffentlichungstag der Patentschrift :
**17.06.92 Patentblatt 92/25**

(51) Int. Cl.⁵ : **F16L 3/10**

(21) Anmeldenummer : **90109968.9**

(22) Anmeldetag : **25.05.90**

(54) **Blockschelle mit Längsrippen.**

(30) Priorität : **18.07.89 DE 8908688 U**

(43) Veröffentlichungstag der Anmeldung :
**23.01.91 Patentblatt 91/04**

(45) Bekanntmachung des Hinweises auf die
Patenterteilung :
**17.06.92 Patentblatt 92/25**

(84) Benannte Vertragsstaaten :
**AT BE CH DE ES FR GB IT LI LU NL SE**

(56) Entgegenhaltungen :
**AT-B- 373 048**
**DE-A- 2 432 171**

(56) Entgegenhaltungen :
**DE-A- 3 901 385**
**GB-A- 1 499 653**
**US-A- 713 135**
**US-A- 4 172 578**

(73) Patentinhaber : **HYDAC TECHNOLOGY GMBH**
**Postfach 1251**
**W-6603 Sulzbach/Saar (DE)**

(72) Erfinder : **Junkes, Peter E., Dipl.-Ing.**
**Mühlstrasse 14a**
**W-6650 Homburg 8 (DE)**

(74) Vertreter : **Patentanwälte Phys. Bartels**
**Dipl.-Ing. Fink Dr.-Ing. Held**
**Lange Strasse 51**
**W-7000 Stuttgart 1 (DE)**

## Beschreibung

Die Erfindung betrifft eine Schelle mit den Merkmalen des Oberbegriffes des Anspruches 1.

Eine dahingehende Schelle ist durch die US-A- 713 135 bekannt. Die dort verwendeten Erhöhungen erstrecken sich axial in den Ausnehmungen des Schellenkörpers und sind im Querschnitt dreieckförmig, wobei eine Dreieckkante als höchste Stelle der Erhöhung in Richtung des Aufnahmeraumes weist. Die Erhöhung bei dieser bekannten Schelle hat über ihre gesamte Länge hinweg eine gleichbleibende Tiefe, ebenso wie die zugehörige Ausnehmung, und dient zur Erhöhung des Preßdruckes der Schelle auf das aufzunehmende Rohr, insbesondere bei einer Verdrehbewegung des Rohres, so daß dieses mit Sicherheit seine Lage in der Schelle beibehält.

Zwischen der dreieckförmigen Erhöhung und der ihr zugeordneten Ausnehmung ist ein Abstand gegeben, über den Feuchtigkeit, die sich beispielsweise im Aufnahmeraum in den Spalten zwischen der Außenwand des Rohres und den Seitenwänden des Aufnahmeraumes bilden kann, nach außen aus der Schelle heraus in die Umgebung ableitbar ist. Durch diese Art von Entwässerungs-und Belüftungskanälen läßt sich die Wasser- und Kondensatansammlung und die damit einhergehende Rohrkorrosion weitgehend vermeiden, sofern die Rohre in ihrer Verlaufrichtung im wesentlichen vertikal geführt sind. Insbesondere bei horizontaler Anordnung der Rohre bleibt aber die Feuchtigkeit zwischen den Abständen innerhalb der Schelle stehen und bewirkt die Rohrkorrosion, die durch Temperaturwechsel in einem feuchtwarmen Klima noch begünstigt ist.

Andere Schellen, die schon seit Jahren auf dem Markt erhältlich sind, wie beispielweise die in den US-A- 1 018 263, US-A- 1 201 706, US-A- 2 676 025, US-A- 4 172 578, US-A- 4 565 464 und der GB-A- 1 499 653 gezeigten, verfügen zur Erhöhung des Preßdruckes des Schellenkörpers auf das aufzunehmende Rohr über vorstehende Rippen, die zwischen kanalförmigen Ausnehmungen angeordnet sind, die allerdings längs ihres Bodens keinerlei in Richtung des Aufnahmeraumes weisende Erhöhungen haben und die demgemäß, wie bei dem eingangs erwähnten Stand der Technik, eine zufriedenstellende Entwässerung und Belüftung des Rohres in der Schelle nur sicherstellen, sofern das aufzunehmende Rohr im wesentlichen vertikal angeordnet ist.

Ausgehend von diesem Stand der Technik liegt der Erfindung die Aufgabe zugrunde, eine Schelle zu schaffen, die bei beliebiger Orientierung des in der Schelle aufzunehmenden Rohres zur Vermeidung von Rohrkorrosion eine optimale Entwässerung und Belüftung erreicht. Diese Aufgabe löst eine Schelle mit den Merkmalen des Anspruches 1.

Dadurch, daß gemäß dem kennzeichnenden Teil des Hauptanspruches bei der erfindungsgemäßen Schelle die Erhöhung in axialer Richtung zu dem jeweils freien Ende hin schräg abfällt oder aus einer Wölbung besteht, kann die in der Schelle befindliche Feuchtigkeit in jeder räumlichen Lageanordnung der Schelle und damit des aufzunehmenden Rohres nach außen ins Freie ablaufen, also selbst bei einer horizontalen Anordnung von Schelle mit aufgenommenem Rohr.

Soweit die bekannten gattungsfremden Schellen aus Kunststoffteilen bestehen sollten, die mittels eines Spritzgußwerkzeuges im Spritzgießverfahren herstellbar sind, dessem Rippen für das Erstellen der Ausnehmungen in der jeweiligen Schelle parallel zur Längsachse des aufzunehmenden Rohres verlaufen, tritt grundsätzlich beim Abkühlungsprozeß ein gewisser Verzug bei der Schelle in Form einer Schrumpfung auf, bei der der Boden der jeweiligen Ausnehmung, soweit dieser gemäß dem verwendeten Spritzgußwerkzeug geradlinig verlaufen sollte, eine vom Inneren der Ausnehmung abgekehrte Vertiefung, beispielsweise in Form einer Mulde, erhält, in der sich dann die im späteren Einsatz der Schelle entstehende Feuchtigkeit ansammelt, die die Rohrkorrosion bewirkt. Für die erfindungsgemäße Schelle aus Kunststoff wird dies aber mit Sicherheit dadurch vermieden, daß das Spritzgußwerkzeug an seinen Rippen, die die späteren Ausnehmugen der Schelle bilden, Vertiefungen aufweist, aus denen sich beim Herstellen die erfindungsgemäßen Erhöhungen in den Ausnehmungen ergeben.

Im folgenden ist die Erfindung anhand eines Ausführungsbeispieles der Schelle näher erläutert. Es zeigen:
Fig. 1 eine Seitenansicht auf die Schelle,
Fig. 2 eine Draufsicht auf eine der beiden Schellenschalen der Schelle nach Fig. 1,
Fig. 3 einen Schnitt nach der Linie I-I in Fig. 1,

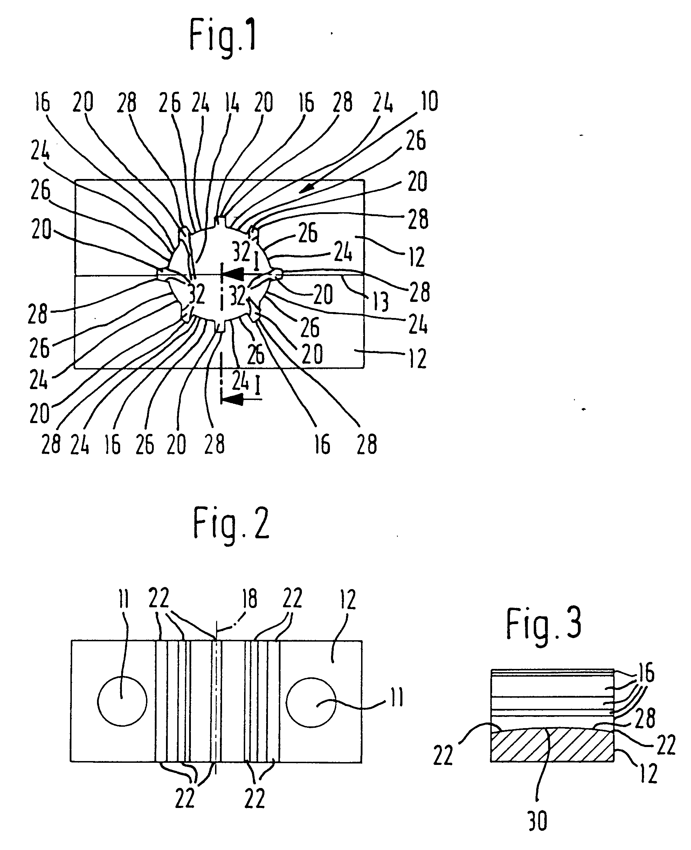

Fig. 1 zeigt eine Schelle, die aus einem als Ganzes mit 10 bezeichneten Schellenkörper gebildet ist, der im wesentlichen aus zwei gleichartigen Schellenschalen 12 zusammengesetzt ist. Die beiden Schellenschalen 12 sind entlang einer Trennebene 13 miteinander verbunden, die bei der Darstellung in Fig. 1 im wesentlichen in einer horizontalen Ebene verläuft. Für das Verbinden der beiden Schellenschalen 12 miteinander sind Verbindungsmittel der üblichen Art, beispielsweise Schrauben vorgesehen, die in Bohrungen 11 eingreifen, wie sie in Fig. 2 für eine der beiden Schellenschalen 12 dargestellt sind. Die beiden Schellenschalen 12, die im wesentlichen Halbschalen darstellen, begrenzen mit ihren einander benachbart zugekehrten Flächen einen im Querschnitt im wesentlichen kreisringförmig verlaufenden Aufnahmeraum 14, dessen einander gegenüberliegenden Enden ins Freie, also in die Umgebung münden und der für die Aufnahme eines Rohres (nicht dargestellt), beispielsweise eines Stahlrohres, in dessen Inneren Medien verschiedenster Art, beispielsweise Fluide transportierbar sind, vorgesehen ist. Der Durchmesser des Aufnahmeraumes 14 und damit auch die Abmessungen der Schelle selbst sind derart bemessen, daß das aufzunehmende Rohr (nicht dargestellt) an die Auflageflächen 26 zu liegen kommt, die von den Seitenwänden 16 der beiden Schellenschalen 12 gebildet sind, wobei das Rohr zwischen diesen Auflageflächen 26 zu seiner Lagefixierung festklemmbar ist. Die Längsachse 18 des aufzunehmenden Rohres, die in Fig. 2 andeutungsweise dargestellt ist, verläuft im wesentlichen deckungsgleich mit der Längsachse des Aufnahmeraumes 14 der Schelle, mithin also bei der in Fig. 1 gewählten Darstellung der Schelle im wesentlichen in einer horizontalen Ebene verlaufend. Parallel zu dieser Längsachse 18 verlaufen in den Seitenwänden 16 des Aufnahmeraumes 14 acht Ausnehmungen 20, die sich als Nuten längs durch den Schellenkörper 10 erstrecken, die mit dem Inneren des Aufnahmeraumes 14 in Verbindung stehen und die mit ihren jeweils einander benachbart gegenüberliegend angeordneten Enden 22 zur Bildung einer Ablaufrinne für die Feuchtigkeit, insbesondere in Form von Wasser und Kondensat ins Freie münden.

Soweit das Rohr (nicht dargestellt) zu seiner Befestigung im Aufnahmeraum 14 zwischen den Längsrippen 24, die an ihren einander zugewandten Seiten jeweils die Auflageflächen 26 aufweisen, festgeklemmt ist, kann die seitlich aus der Umgebung in das Innere der Schelle 10 eindringende Feuchte, die sich zwischen den Seitenwänden 16 des Aufnahmeraumes 14 und dem Außenumfang des Rohres (nicht dargestellt) in Form von Wasser und Kondensat ansammelt über die als Ablaufrinnen dienenden Ausnehmungen 20 wieder nach außen hin ins Freie abgeführt werden. Die Wahl der Anzahl der Ausnehmungen 20, in dem hier vorliegenden Ausführungsbeispiel 8 Stück, ist abhängig von den Anwendungsfällen, für die die Schelle zum Einsatz kommt und kann abhängig von diesen Gegebenheiten frei variiert werden.

Bei dem in Fig. 1 gezeigten Ausführungsbeispiel der Schelle ist die in Blickrichtung zuoberst und zuunterst angeordnete Ausnehmung 20 im Querschnitt, der parallel zu einer vertikal verlaufenden Ebene angeordnet ist, im wesentlichen rechteckförmig ausgebildet, wohingegen die restlichen 6 Ausnehmungen 20 einander benachbart gegenüberliegend angeordnete Wände 32 aufweisen, die im spitzen Winkel zueinander verlaufen. Die letztgenannte Anordnung ist besonders dann zweckmäßig, wenn die Schelle aus einem Gußteil gebildet ist, da sich dann die Schelle in besonders einfacher Weise, beispielsweise von einem Spritzgußwerkzeug lösen läßt. Ferner ist an der Stelle des Zusammentreffens der zwei Schellenschalen entlang der Trennebene 13, die in dieser Trennebene 13 liegenden Ausnehmungen 20 von den beiden Schellenschalen 12 gemeinsam gebildet.

Bei der erfindungsgemäßen Schelle ist der Boden 28 der jeweiligen Ausnehmung 20 mit einer in das Innere des Aufnahmeraumes 14 hineinragenden Erhöhung 30 versehen. Diese Erhöhung 30 ist in Form einer Wölbung ausgebildet, die in Richtung der Längsachse der Schelle gesehen, in der Mitte des Bodens 28 der Ausnehmung 20 angeordnet ist. Die Enden 22 der Ausnehmung 20 fallen gegenüber dieser Erhöhung 30 nach außen hin schräg ab und enden im Freien.

## Patentansprüche

1. Schelle, bestehend aus einem Schellenkörper (10) mit mindestens zwei Schellenschalen (12), die mindestens einen Aufnahmeraum (14) begrenzen, dessen Seitenwände (16) zumindest teilweise den Umfang eines vom Aufnahmeraum (14) aufzunehmenden Rohres umfassen, wobei in den Seitenwänden (16) des Aufnahmeraumes (14) parallel zur Längsachse des aufgenommenen Rohres mindestens eine Ausnehmung (20) im Schellenkörper (10) verläuft, die zumindest mit einem ihrer Enden (22) ins Freie mündet und wobei zumindest bei einem Teil der Ausnehmungen (20) ihr Boden (28) eine sich axial erstreckende, in Richtung des Aufnahmeraumes (14) weisende Erhöhung (30) aufweist, dadurch gekennzeichnet, daß die Erhöhung (30) im axialer Richtung zu dem jeweils freien Ende (22) hin schräg abfällt oder aus einer Wölbung, die in axialer Richtung abnimmt, besteht.

2. Schelle nach Anspruch 1, dadurch gekennzeichnet, daß zwischen den Ausnehmungen (20) und im wesentlichen parallel zu diesen, Längsrippen (24) zur Bildung einer Auflagefläche (26) für das aufzunehmende Rohr im Schellenkörper (10) verlaufen.

3. Schelle nach einem der Ansprüche 1 bis 2, dadurch gekennzeichnet, daß die höchste Stelle der Erhöhung (30) in der Mitte des Bodens (28) der Ausnehmung (20) angeordnet ist.

4. Schelle nach einem der Ansprüche 1 bis 3, dadurch gekennzeichnet, daß zumindest bei einem Teil der Ausnehmungen (20) diese im Querschnitt rechteckförming ausgebildet sind.

5. Schelle nach einem der Ansprüche 1 bis 3, dadurch gekennzeichnet, daß mindestens bei einem Teil der Ausnehmungen (20) die einander benachbart gegenüberliegend angeordneten Wände (32) einer jeden Ausnehmung (20) im spitzen Winkel zueinander verlaufen.

3

6. Schelle nach einem der Ansprüche 1 bis 5, dadurch gekennzeichnet, daß an der Stelle des Zusammentreffens zweier Schellenschalen (12) zumindest eine Ausnehmung (20) von diesen beiden Schellenschalen (12) gebildet ist.

## Claims

1. Clamp, consisting of a clamp body (10) with at least two clamp shells (12), which define at least one receiving chamber (14), whereof the side walls (16) at least partly surround the periphery of a pipe to be received by the receiving chamber (14), in the side walls (16) of the receiving chamber (14) at least one recess (20) in the clamp body (10) extends parallel to the longitudinal axis of the pipe received, which clamp body opens at least by one of its ends (22) into the atmosphere and whereby at least in part of the recesses (20), their base (28) has a prominence (30) extending axially and pointing in the direction of the receiving chamber (14), characterised in that the prominence (30) falls away obliquely in the axial direction, towards the respective free end (22) or consists of a curve, which decreases in the axial direction.

2. Clamp according to Claim 1, characterised in that longitudinal ribs (24) extend between the recesses (20) and substantially parallel to the latter, for forming a contact surface (26) for the pipe to be received in the clamp body (10).

3. Clamp according to one of Claims 1 or 2, characterised in that the highest point of the prominence (30) is located in the centre of the base (28) of the recess (20).

4. Clamp according to one of Claims 1 to 3, characterised in that at least in part of the recesses (20), the latter are constructed with a rectangular cross-section.

5. Clamp according to one of Claims 1 to 3, characterised in that at least in part of the recesses (20), the adjacent, opposing walls (32) of each recess (20) extend at an acute angle with respect to each other.

6. Clamp according to one of Claims 1 to 5, characterised in that at the point where two clamp shells (12) meet, at least one recess (20) is formed by these two clamp shells (12).

## Revendications

1. Bride qui comprend un corps (10) composé d'au moins deux coquilles (12) délimitant, au moins, une chambre ou un espace de réception (14), dont les parois latérales (16) embrassent, au moins en partie, le pourtour d'un tuyau pouvant y être reçu, l'arrangement étant tel que dans les parois latérales (16) de l'espace de réception (14) s'étend, au moins, un évidement (20) dont les extrémités (22) débouchent à l'air libre, tandis que le fond (28) d'une partie, au moins, des évidements (20) présente une élévation (30) orientée en direction de la chambre de réception (14), caractérisée en ce que, parallèlement à l'axe longitudinal du tuyau qui y est reçu, l'élévation (30) décroît en oblique, dans le sens axial, vers l'extrémité libre (22) ou est constituée par une cambrure décroissant dans le sens axial.

2. Bride selon la revendication 1, caractérisée en ce que, entre les évidements (20) s'étendent, pratiquement en parallèle aux évidements (20), des nervures longitudinales (24) destinées à former une surface de repos (26) pour le tuyau appelé à être reçu dans le corps de bride (10).

3. Bride selon l'une ou l'autre des revendications 1 ou 2, caractérisée en ce que le point le plus haut de l'élévation (30) est situé au centre du fond (28) de l'évidement (20).

4. Bride selon l'une quelconque des revendications 1 à 3, caractérisée dans une partie, au moins, des évidements (20), celui-ci présente une forme rectangulaire.

5. Bride selon l'une quelconque des revendications 1 à 3, caractérisée en ce que, les parois adjacentes opposées (32) d'une partie, au moins, des évidements (20°) concourent en formant un angle aigu.

6. Bride selon l'une quelconque des revendications 1 à 5, caractérisée en ce que, au point de rencontre des deux coquilles de bride (12), celles-ci forment, entre elles, au moins, un évidement (20).

EP 0 408 869 B1

Fig.1

Fig.2

Fig.3

5